# EUROPEAN PATENT APPLICATION

(11) **EP 2 515 080 A1**
(43) Date of publication of application: **24.10.2012**
(21) Application number: 12161110.7
(22) Date of filing: 23.03.2012
(51) Int. Cl.: G01C 21/36

(54) **Navigation device - DISPLAY OF SPONSORED POI AHEAD OF OTHER POIs**

(30) Priority: 20.04.2011 IN CH13582011
(71) Applicant: Robert Bosch GmbH, 70442 Stuttgart (DE); Robert Bosch Engineering And Business Solutions Limited, Bangalore 560 095 State of Karnataka (IN)
(72) Inventor: Bharti, Amitesh, 560095 Karnataka (IN); Arunkumar, Sreeja, 560095 Karnataka (IN)

(57) **Abstract**

The object of the invention is to display a sponsored POI ahead in a list with respect to other POIs, in a navigation device. The sponsored POIs are the ones where the POI owners have an agreement with the navigation data suppliers and the navigation device suppliers. The sponsored POIs are displayed in the list ahead of other POIs if the distance between the sponsored POI and a normal POI is within a threshold. This threshold may be static or dynamic where user can set it using a configuration menu.

## Description

### Field of Invention:

The invention relates to a Navigation device.

### BACKGROUND OF THE INVENTION:

Navigation devices displaying the landmarks which are referred as Points of Interest (POI) are known in prior art. The navigation devices contain a database of road network and the POIs. The user can see the POIs contained in the database on the display. The user interface displays the list of POIs on to a display, the list being sorted based on different criteria. The common criteria to display the list of POIs on the display are: according to the distance of the POIs from the current position of the vehicle or from a reference point; according to alphabetical order of the names of the POIs, etc.

The list enables the user to select the POI which may be of interest to him. Once the POI is selected, the navigation device takes the POI address as destination address and calculates a route to the selected POI.

### OBJECT OF THE INVENTION:

The object of the invention is to display a sponsored POI ahead in a list with respect to other POIs. The sponsored POIs are the ones where the POI owners have an agreement with the navigation data suppliers and the navigation device suppliers. The sponsored POIs are displayed in the list ahead of other POIs if the distance between the sponsored POI and a normal POI is within a threshold. This threshold may be static or dynamic where user can set it using a configuration menu.

This is achieved by providing a new feature in the user interface to check if a POI is sponsored POI and display it if the set criteria is satisfied.

### ADVANTAGES OF THE INVENTION:

By displaying the sponsored POIs ahead of normal POIs, the navigation device attracts the user attention towards a POI which may offer better services, for example, better restaurants, hotels, shopping malls etc. This is with the assumption that the navigation data supplier and the navigation device supplier have good knowledge on the quality of the services provided by these sponsored POIs. Here it is assumed that the navigation data supplier and the navigation device supplier have agreements only with good service providers who represent the POIs.

### BRIEF DESCRIPTION OF THE DRAWINGS:

Figure 1 Shows the schematic of the invention
Figure 2 Shows the menu for entering the number of POIs for notifying

### DESCRIPTION OF THE INVENTION:

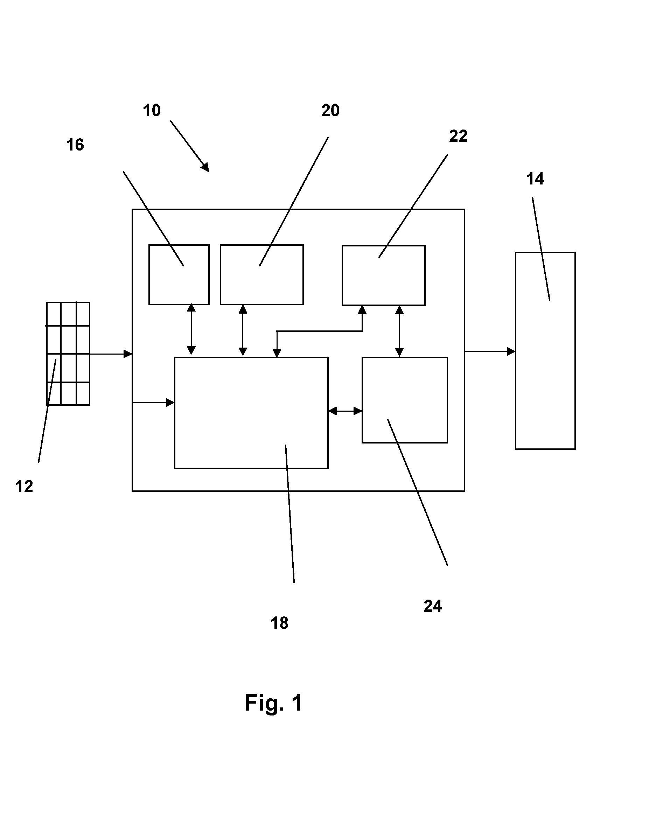

Shown in fig. 1 is a schematic of a navigation device 10. A typical navigation device 10 comprises an input means 12; an output means 14, a position finding means 16, an user interface 18, a route calculation means 20, route guidance means 22 and a road network database 24 which also contains other data, for example, data on POIs. A typical navigation device, its internal components and its functioning are obvious to the people skilled in the art and it is not within the objective of this invention to disclose them in detail. Only the components which are relevant to describe the invention are disclosed.

The input means 12 may be a conventional type of keyboard or a touch screen. Through the input means 12, the user enters the inputs required for the functioning of the navigation device 10, for example for calculating a route that guides the user from a current position to a destination.

The output means 14 may be a display device, e. g. an LCD (liquid crystal display) flat screen. On the display means 14, the maps and the conventional route guidance information may be displayed.

The user interface 18 receives the inputs from the user and passes the inputs to the other means. The user interface 18 also displays the information for the user on the output means 16.

This road network database 24 encompasses all of the necessary geographical data required for performing a routing operation. The road network database 24 is also referred as navigation database.

The position finding means 16 may comprise a GPS receiver and other algorithms to compute the position of the navigation device 10. The route calculation means 20 calculates a route from current vehicle position to the required destination. When the route is calculated, the user inputs entered into the input means for specifying the desired traveling route and the data from the road network database are thereby taken into account. The route so calculated may be displayed on the output means 14. The route guidance means 22 guides the user from the starting position to the required destination along the calculated route. The route guidance means 22 may output from time to time audio and/or visual instructions for the user.

Some of the above means explained may be combined.

The road network database 24 also comprises a set of destinations referred as Points Of Interest or POI for short. The POIs indicate locations which are of interest to the user. The POIs are normally organized under categories. The examples of POI categories are Hotels, Restaurants, Tourist Places, Shopping malls, Railway stations, Airport etc. The examples are only for the purpose of illustration and not act as a limitation. Below a particular category, a location identified by geographical co-ordinates is included as a POI. The POIs may contain additional attributes to describe the POI.

The road network database 24 may be referred as database or navigation database in rest of the document.

Some of the POIs in the navigation database are sponsored POIs. The sponsored POIs are the ones where the POI owners have an agreement with the navigation data suppliers and the navigation device suppliers. In the navigation database, each POI will have an attribute indicating whether the POI is sponsored POI or a normal POI. Normal POIs are the ones where the POI owners have no agreement with the navigation data suppliers and the navigation device suppliers.

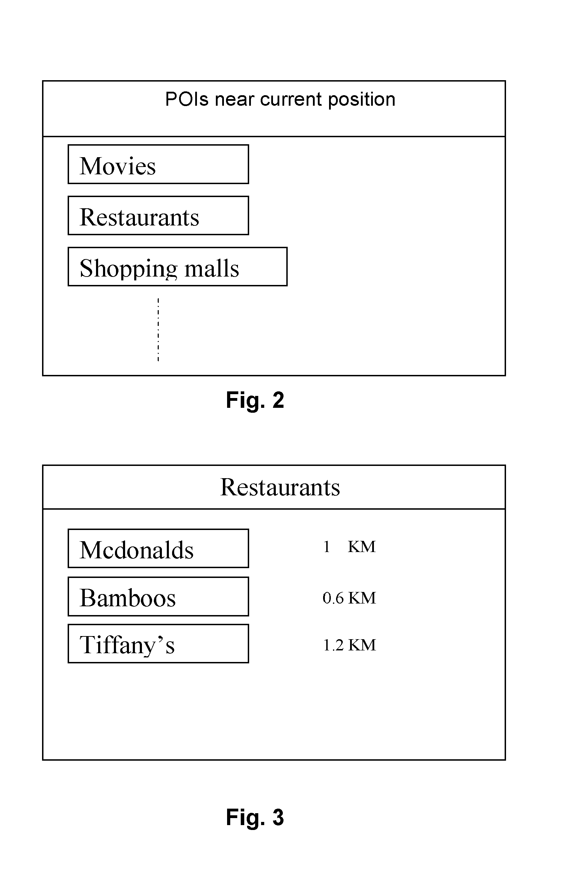

Fig. 2 shows a POI menu where user can select a category. This menu may be entered through different menus which are not shown in fig. 2 as these are commonly known in the prior arts.

Once the user selects a category, the user interface retrieves the POIs from the database and stores them in a list in the memory as known by the prior arts. The POIs which are retrieved may be the ones which are near to the current position of the vehicle. For this, the position finding means computes the current position of the vehicle based on the GPS data received. Based on the current position, the required POIs are retrieved from the navigation database.

The POI list may be arranged according to the distances of the POIs from the current position of the vehicle. The user interface then checks if there are any sponsored POIs in the list. This is achieved by checking the attributes of the POIs.

If there are sponsored POIs in the list then the user interface checks whether the distance between a sponsored POI and a preceding normal POI is within the set threshold. If the distance between the sponsored POI and the preceding normal POI is beyond the threshold, then the user interface displays the list according to the distance, as known in the prior arts. If the distance between a sponsored POI and a normal POI is within the set threshold, then the user interface inserts the sponsored POI ahead in the list with respect to the normal POIs and displays. This is shown in Fig. 3.

Fig. 3 is explained only as an example.

Here the threshold for comparing the distance is assumed as 0.5 KM, for example.

When the user selects a category for POI, the user interface first prepares a list of POIs corresponding to the selected category. The user interface prepares this list according to the distances, for example, Bamboos 0.6 KM, Mcdonalds 1 KM, Tiffany's 1.2 KM. Then it checks for the sponsored POIs and finds that, for example only Mcdonalds is a sponsored POI. The user interface compares the distance between Mcdonalds and the preceding normal POI, i.e. Bamboos, with a threshold. The distance in this example is taken as within the threshold. So user interface re-arranges the list by inserting the Mcdonalds ahead in the list with respect to the preceding POI, i.e Bamboos. Thus the re-arranged list is formed as : Mcdonalds 1 KM, Bamboos 0.6 KM, Tiffany's 1.2 KM and displayed.

For the above case if only Tiffany's was sponsored POI, then the user interface displays the list as Bamboos 0.6 KM, Tiffany's 1.2 KM, Mcdonalds 1 KM. This is because the distance between sponsored POI Tiffany's and the Mcdonalds is within threshold but the distance between Tiffany's and Bamboos is outside the threshold.

Thus from the initial list in the memory, the distance of a sponsored POI with respect to each of the preceeding normal POIs is checked to decide whether the distance is within the threshold. If the distance is within the threshold, then the sponsored POI gets inserted ahead of the compared normal POI. Thus it is possible that a sponsored POI jumps ahead more than one place in the re-arranged list with respect to the normal POIs.

If there are more than one sponsored POIs, then the steps are repeated for each of the sponsored POIs.

The threshold used to compare the distance between the sponsored POI and a normal POI may be static one, which is fixed, or it may be configurable using a menu.

Thus by displaying the sponsored POIs ahead of normal POIs in a list, the user is offered better choices.

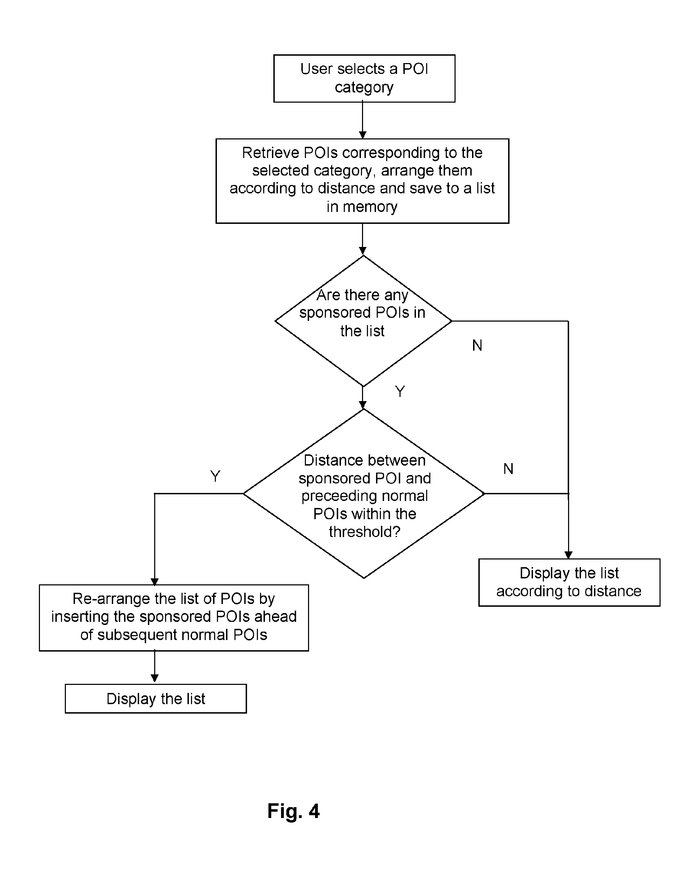

Fig. 4 shows the flow chart of the invention explained above.

## Claims

1. A navigation device (10) adapted to display a sponsored POI ahead of a normal POI in a list.

2. A navigation device (10) according to claim 1 contains a navigation database (24), the said navigation database (24) comprising information on normal POIs and sponsored POIs.

3. A navigation device according to claim 1 and 2 wherein the sponsored POI has an attribute indicating it is a sponsored POI.

4. A navigation device according to claim 1 and 2 wherein the normal POI has an attribute indicating it is a normal POI.

5. A navigation device according to claim 1 and 2 wherein the said navigation database 24 comprises the location information of the normal POIs and sponsored POIs.

6. A navigation device according to claim 1 wherein, if the distance between a sponsored POI and a preceeding normal POI is within a threshold, the sponsored POI is displayed ahead in the list.

7. A navigation device according to claim 1 wherein the said threshold is predefined

8. A navigation device according to claim 1 wherein the said threshold is programmable by the user.

9. A method to display the sponsored POI ahead of a normal POI, the said method comprising the steps:
- retrieving the POIs from the navigation database depending upon the category selected by the user
- displaying the sponsored POIs ahead of the said normal POIs
